# EUROPEAN PATENT SPECIFICATION

(11) **EP 3 815 979 B1**
(45) Date of publication and mention of the grant of the patent: **16.03.2022**
(21) Application number: 20205243.7
(22) Date of filing: 02.11.2020
(51) Int. Cl.: B60R 11/02, B62J 9/00, B62J 11/00

(54) **REMOVABLE AND FIXABLE OBJECT CARRIER FOR A MOTORCYCLE**
ABNEHMBARER UND FIXIERBARER OBJEKTTRÄGER FÜR EIN MOTORRAD
PORTE-OBJETS AMOVIBLE ET FIXABLE POUR UNE MOTO

(30) Priority: 04.11.2019 IT 201900020234
(43) Date of publication of application: 05.05.2021
(73) Proprietor: Givi S.p.A., 25020 Flero (BS) (IT)
(72) Inventor: VISENZI, Giuseppe, 25100 BRESCIA (IT)
(74) Representative: Branca, Emanuela

(56) References cited:
- US-A1- 2016 052 464
- US-B1- 7 594 631

## Description

The present invention relates to a removable and fixable object carrier for a motorcycle.

In the state of the art removable object carrier cases for motorcycles are known comprising a coupling and release system comprising a first group of components constrained to the object carrier case and a second group of components constrained to the motorcycle. The first group of components comprises a flexible ring provided with a multitude of locking teeth engaging with an annular flange of the second group of components for creating a coupling of the object carrier case to the motorcycle as in the patent granted number EP 2534385 by the present applicant.

In the state of the art, fixed object carrier cases for motorcycles are known.

Disadvantageously, there are no object carriers that can be both removable and fixable as preferred by a motorcyclist. US2016/052464A shows an object carrier according to the preamble of claim 1.

The aim of the present invention consists of creating an object carrier for a motorcycle that may be easily reached by the motorcyclist, easy to mount and dismount, easy to open and close, easy to remove and easy to fix as preferred by the motorcyclist, which can act as a support for example for remote payment devices for tolls or other services or as a support for example for assisted driving devices.

According to the invention, such aim is reached with an object carrier according to claim 1.

Other features are comprised in the dependent claims.

The features and advantages of the present invention will be more apparent from the following description, which is to be understood as exemplifying and not limiting, with reference to the appended schematic drawings, wherein:

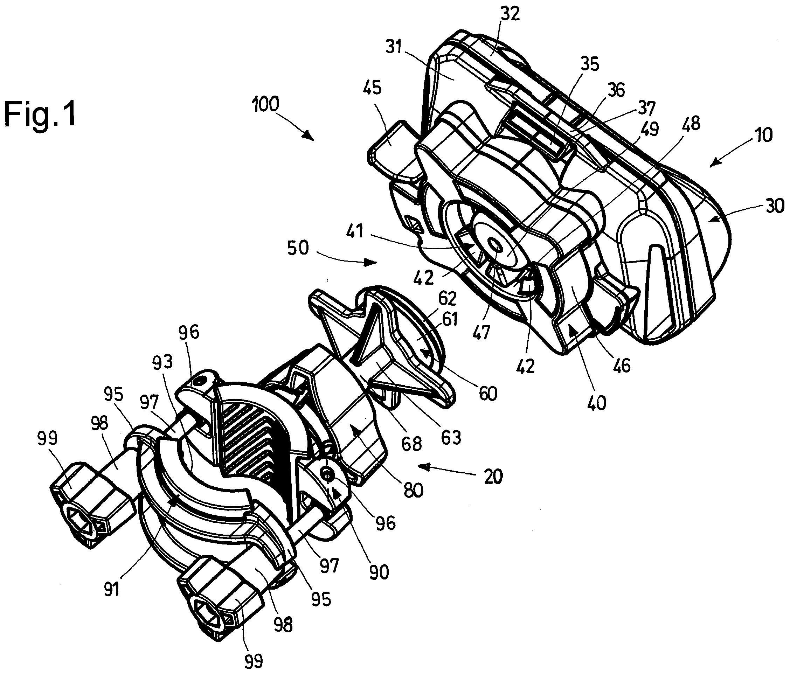

figure 1 is an isometric view from below of a removable and fixable object carrier for motorcycles according to the present invention comprising a first openable support for objects and a second support in a separate configuration, wherein the second support is adapted to support the first support, which can be mounted with the first support in a separable way by means of a first coupling and release system and in a fixed way by means of a first fixing means, which can be mounted with a tube of the motorcycle in a separable way by means of a second coupling and release system;

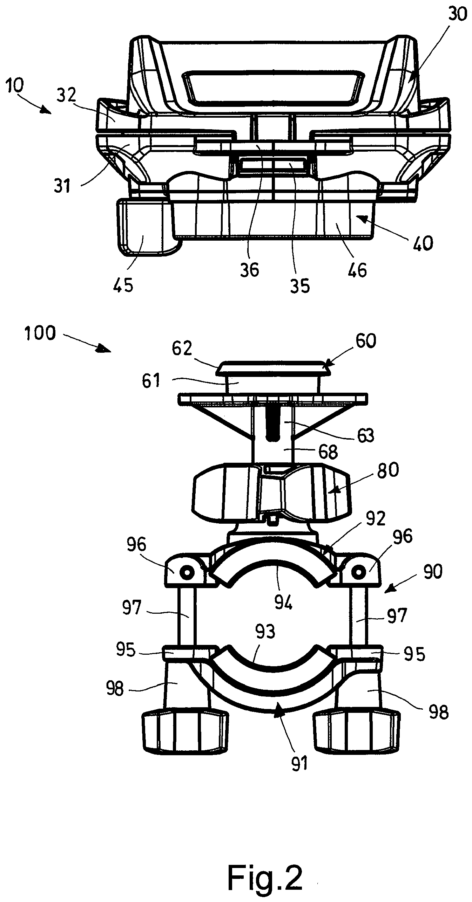

figure 2 is a front view of the removable and fixable object carrier of figure 1;
figure 3 is a view from below of the first support which shows the first coupling and release system;
figure 4 is a front view of the removable and fixable object carrier in the mounted configuration, wherein the first coupling and release system is in the coupled configuration;
figure 5 is a sectional view according to the line V-V of figure 4, wherein the first fixing means mounts the first support with the second support in a fixed way;

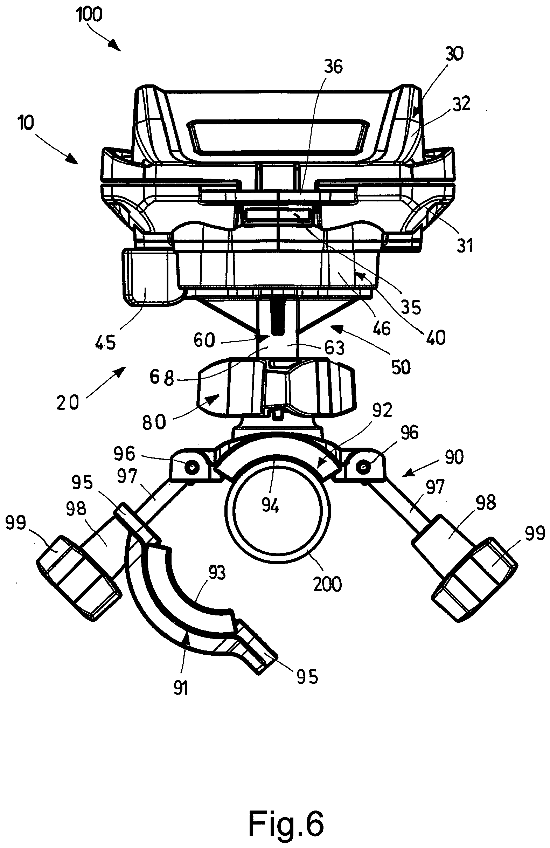

figure 6 shows a front view of the object carrier in the mounted configuration, wherein the second support is in the released configuration from the motorcycle tube;
figure 7 shows an isometric view of the object carrier in the mounted configuration, wherein the second support comprises a second coupling and release system comprising a second fixing means that mounts the second support in a fixed way with the motorcycle tube;
figure 8 shows a side view of the object carrier of figure 7;
figure 9 shows a sectional view according to the lines IX-IX of figure 8.

With reference to the mentioned figures, a removable and fixable object carrier 100 for a motorcycle comprising a first support 10 for objects and a second support 20 is shown. The second support 20 supports the first support 10. The second support 20 is mounted with the first support 10 in a separable way by means of a first coupling and release system 50 and in a fixed way by means of a first fixing means 70. The second support 20 is adapted to be mounted with a tube 200 of the motorcycle in a separable way by means of a second coupling and release system 90 of the second support 20.

The first support 10 comprises an openable container 30. The container 30 is adapted to contain a remote payment device such as for example a remote payment device for a motorway toll or a remote payment device for further services, for example a Telepass^{™} device.

The figures show that the container 30 is a single part with the first support 10 and the container 30 is an upper portion of the first support 10.

The container 30 comprises a lower portion 31 and an upper portion 32 which can be hinged for a respective first side by means of a hinge 33. The lower portion 31 comprises a second side opposite the hinged side, wherein the second side of the lower portion 31 comprises a protuberance 36 comprising a through opening 34. The protuberance 36 projects from the second side of the lower portion 31 towards the outside of the container 30. The upper portion 32 comprises a second side opposite the first hinged side, wherein the second side of the upper portion 32 comprises an elastic tongue 35 comprising a tooth 37. The through opening 34 is obtained in the protuberance 36 so as to allow a through passage by the elastic tongue 35 according to a vertical geometric axis V that is perpendicular to a geometric plane lying above the through opening 34. The through opening 34 comprises opening dimensions adapted to enable the passage of the entire elastic tongue 35 comprising the tooth 37. The elastic tongue 35 comprises an upper portion which is coupled to the upper portion 32 of the container 30 and a lower portion that comprises the tooth 37. The tooth 37 is a thicker portion than the tongue 35. The tongue 35 comprises an oblique portion that gradually increases the thickness of the tongue 35 starting from the lower end to the tooth 37 which has a lower thickness, until reaching the tooth 37 which has a larger thickness than the rest of the tongue 35. The oblique portion of the tongue 35 advantageously enables the tongue 35 to be inserted easily into the through opening 34 by pushing downwards so that the upper portion 32 of the cover 30 can be pushed downwards to make the cover 30 pass from an open configuration to a closed and locked configuration.

To engage the elastic tongue 35 with the through opening 34 the elastic tongue 35 is folded elastically into a more elastic bending position towards the container 30 by making the tooth 37 pass through the through opening 34. Once the tooth 37 has passed through the through opening 34 the elastic tongue 35 returns to a less elastic bending position and the tooth 37 is engaged below the protuberance 36 so as to prevent the opening of the container 30.

To release the elastic tongue 35 and enable the container 30 to pass from the closed and locked configuration to the open position it is necessary to press the elastic tongue 35 at the tooth 37 towards the container 30 so as to make the elastic tongue 35 pass from the less elastic bending position to the more elastic bending position and push the tongue 35 upwards so that the entire tongue 35 including the tooth 37 passes through the through opening 34 and releases the second openable side of the upper portion 32 of the container 30 so as to make the container 30 pass from the closed configuration to the open configuration.

The first coupling and release system 50 comprises a first group of elements 40 mounted with the first support 10 and a second group of elements 60 mounted with the second support 20.

The first group of elements 40 is arranged below the cover 30 in the lower portion of the first support 10.

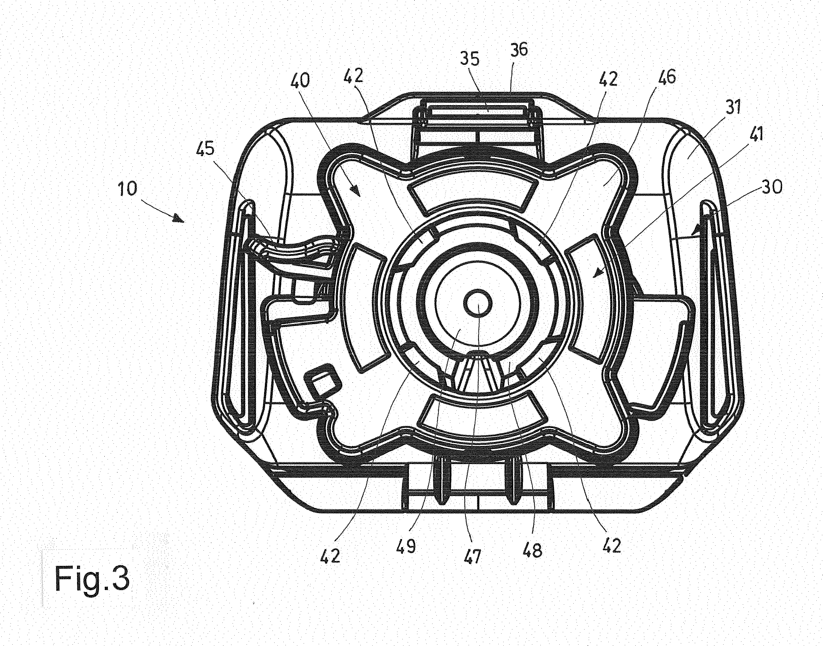

The first group of elements 40 comprises a flexible ring 41 comprising a multitude of locking teeth 42 that project elastically towards the inside of the flexible ring 41. The first group of elements 40 comprises an annular connection element 46 comprising an annular guide that rotatably mounts the flexible ring 41, an annular housing 48 that hollows out the annular connection element 46 towards the inside upwards in a vertical direction and a central protuberance 49 that rises from the annular housing 48 in a vertical direction downwards. Figure 3 shows the flexible ring 41 arranged below a shutter of the annular connection element 46.

The second group of elements 60 is arranged above an upper base 63 of the second support 20.

The second group of elements 60 comprises an annular portion 61 that projects in the vertical direction upwards having as a base the upper base 63 of the second support 20. The annular portion 61 comprises an upper end that comprises an annular flange 62. The annular portion 61 is a cylinder that is hollow in its centre.

The annular portion 61 is adapted to be housed inside the walls of the internal walls of the annular connection element 46 inside the annular housing 48. The central protuberance 49 is adapted to be housed within the central cavity of the annular portion 61.

The locking teeth 42 are adapted to be engaged with the annular flange 62 for creating a coupling of the first support 10 with the second support 20.

The locking teeth 42 can be retracted into the annular connection element 46. The locking teeth 42 are adapted to pass from a retracted position within the annular connection element 46 to an extracted position for engaging with said annular flange 62 for creating a coupling of the first support 10 with the second support 20.

The flexible ring 41 comprises a lever 45 which is a manual radial retraction mechanism of the locking teeth 42.

To connect the first support 10 with the second support 20 the annular portion 61 of the second support 20 is inserted into the annular housing 48 of the first support 10. Then the lever 45 is activated for turning the flexible ring 41 in the radial direction so that the locking teeth 42 of the flexible ring 41 project radially towards the inside below the annular flange 62 so as to prevent the second support 20 from being extracted from the first support 10.

To disconnect the first support 10 from the second support 10 the lever 45 is turned in the radial direction so that the locking teeth 42 return into the annular guide of the annular connection element 46 and leave the annular flange 62 free so that the second support 42 can be extracted from the first support 10.

Advantageously, it is possible to choose to mount the first support 10 with the second support 20 in an easily removable way through the first coupling and release system 50 described above, in a fixed way by means of a first fixing means 70.

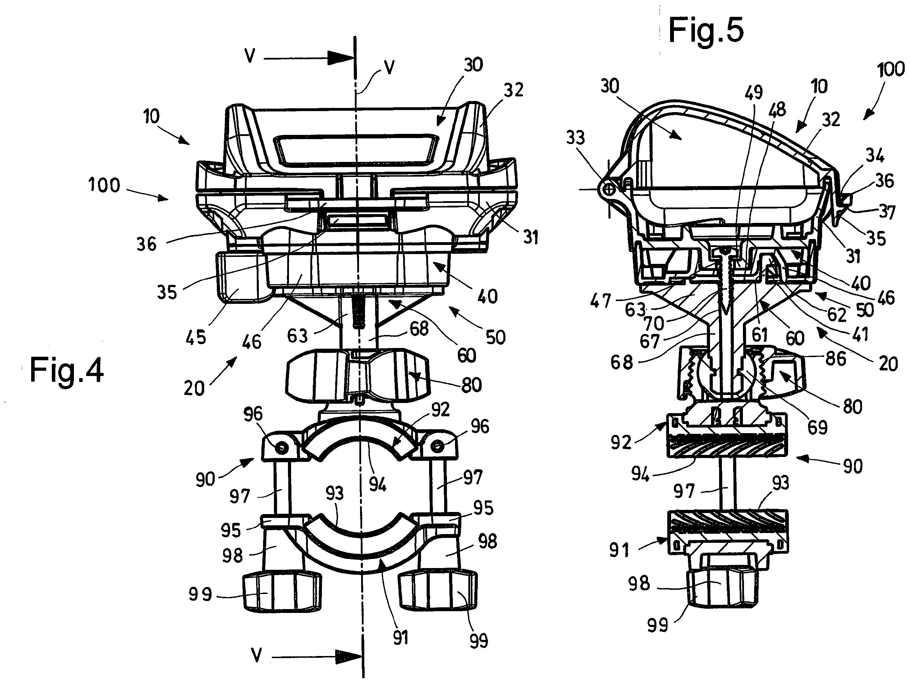

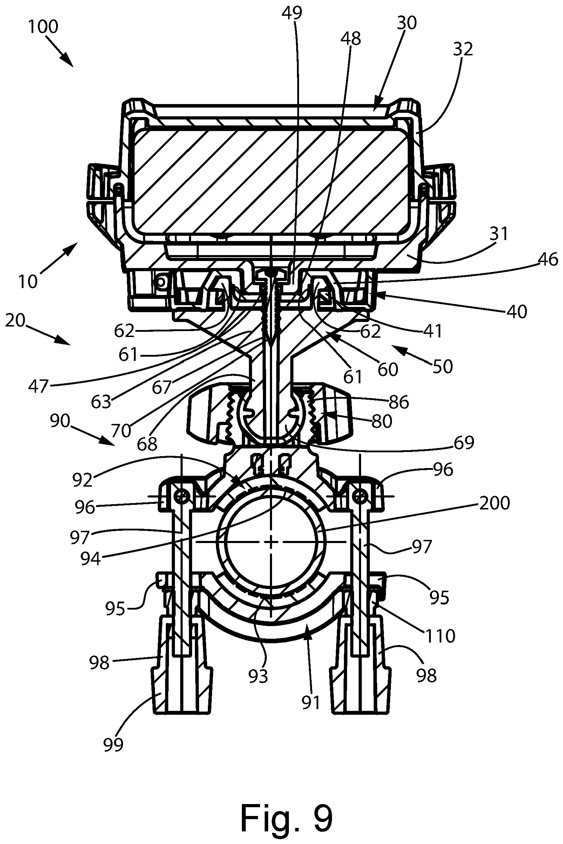

As shown in particular in figures 5 and 9 the first fixing means 70 is a screw, preferably self-threading.

The first group of elements 40 comprises an upper through hole 47 hollowed out within the central protuberance 49 in the vertical direction. The upper through hole 47 is adapted to enable the first fixing means 70 to be screwed into the upper through hole 47.

The second group of elements 60 comprises a lower hole 67 corresponding to the upper through hole 47. The lower hole 67 is hollowed out within the upper base 63 of the second support 20. The lower hole 67 is adapted to enable the first fixing means 70 to be screwed into the lower hole 67.

The first fixing means 70 is screwed to the cover 30 in the open configuration so that the first fixing means 70 screws the first support 10 with the second support 20 in a fixed way.

It is possible to evaluate that the self-threading screw of the first fixing means 70 can be unscrewed and screwed about 40 times into holes 47, 67 hollowed out in plastic material.

As shown in particular in figures 5 and 9, the lower portion of the second support 20 comprises a shaft 68 which ends towards the bottom in a spherical portion 69 adapted to allow the regulation in the vertical direction of the object carrier with respect to the motorcycle tube 200.

The second support 20 comprises a fixing element 80 that comprises a ring nut 86 adapted to clamp the spherical portion 69 and to keep it fixed in space.

The second support 20 comprises a lower portion connected to the second coupling and release means 90.

The second coupling and release means 90 comprises an upper portion 92 and a lower portion 91. The upper portion 92 is connected to the lower portion of the second support 20. The upper portion 92 comprises an upper curvilinear element 94 and the lower portion 91 comprises a lower curvilinear element 93. The lower 93 and upper 94 curvilinear elements have a complementary shape to that of the motorcycle tube 200 and are adapted to be engaged with the tube 200 for fixing the object carrier 100 to the motorcycle.

The motorcycle tube 200 may be a tube of a mirror, a tube of a handlebar or a tube of a frame.

Alternatively to what is shown in the figures, it is possible for the object carrier 100 to also be fixed to tube 200 sections that are not round or of different diameters.

The upper portion 92 of the second coupling and release means 90 comprises two hinges 96.

The lower portion 91 of the second coupling and release means 90 comprises two fork elements 95.

The second coupling and release means 90 comprises two tubular elements 97. Every tubular element 97 of the two tubular elements 97 comprises an upper portion comprising an upper end hinged with one hinge 96 of the two hinges 96 and a lower portion that is adapted to pass into one fork element 95 of the two fork elements 95.

The lower portion of the tubular element 97 comprises at least one threaded portion.

The second coupling and release means 90 comprises a nut 98 adapted to be engaged with the threaded portion of the tubular element 97 so as to fix the tubular element 97 with the fork element 95.

The nut 98 comprises a cylindrical body comprising a greater thickness with respect to a through opening of the fork element 95. The portion of the nut 98 with the greater thickness is at least an upper portion of the nut 98.

The nut 98 comprises a lower portion that comprises a handle 99 adapted to allow the nut 98 to be manually screwed onto the threaded portion of the tubular element 97.

The nut 98 is adapted to removably mount the second support 20 with the motorcycle tube 200.

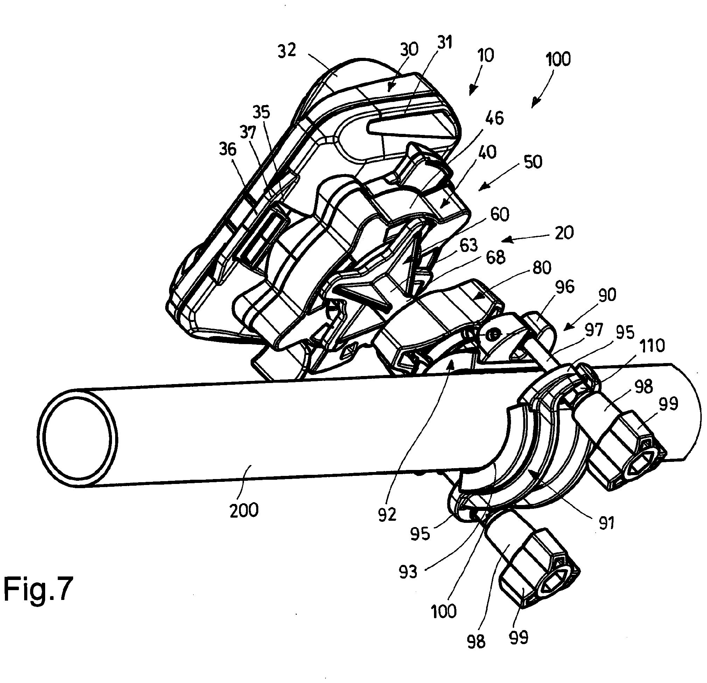

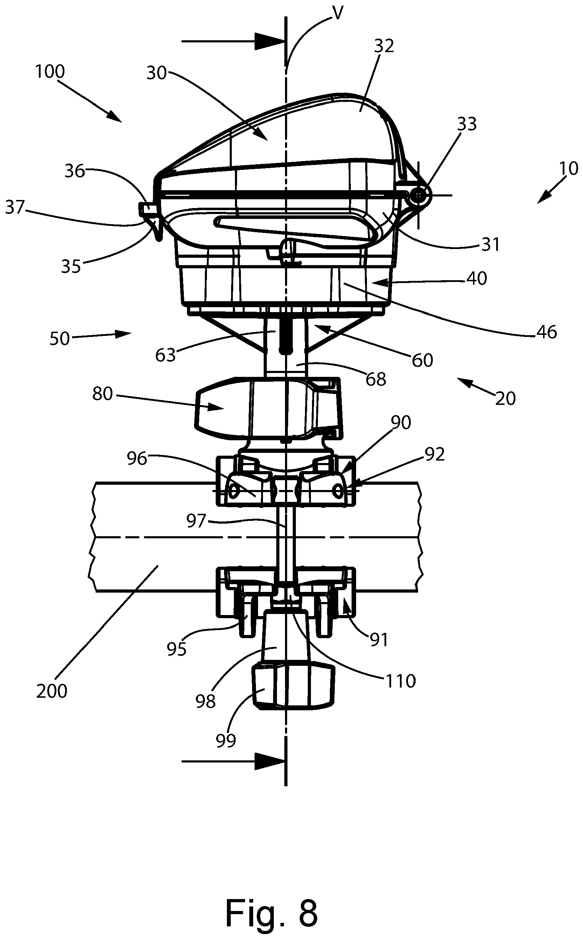

As shown in figures 7-9 it is possible to envisage that the second support 20 comprises a second fixing means 110 that is a self-locking nut.

To fix the second support 20 in a fixed way to the motorcycle tube 200 it is possible to screw the self-locking nut of the second fixing means 110 onto the threaded portion of the tubular element 97 and then screw the nut 98 onto the remaining threaded portion of the tubular element 97 so that the nut 98 is only required to cover the remaining portion of the tubular element 97. The self-locking nut of the second fixing means 110 advantageously enables the second support 20 to be fixed to the motorcycle tube 200.

Advantageously, the object carrier 100 for a motorcycle of the present invention is easy to reach by the motorcyclist, easy to mount and dismount, easy to open and close, easy to remove and easy to fix as preferred by the motorcyclist, can act as a support for example for remote payment devices for tolls or other services or as a support for example for assisted driving devices.

Alternatively it is possible to envisage that the first support 10 is not openable and that it comprises a support for an assisted driving system such as for example an electronic device for road maps or a support for a communication device such as for example a mobile phone.

Alternatively it is possible to envisage that the first support 10 comprises an upper portion that mounts the container 30 and that the container 30 may be separably connected with the upper portion of the first support 10.

Alternatively the first fixing means 70 is a screw, the upper through hole 47 and the lower hole 67 are threaded for at least a respective portion. In this alternative it is envisaged that the screw of the first fixing means 70 is locked by a nut so as to enable the first support 10 to be fixed with the second support 20.

Alternatively it is possible to mount the shaft 68 or the base 63 of the second support 20 directly with a cap of the motorcycle tank.

Alternatively it is possible to mount the shaft 68 of the second support 20 directly with the motorcycle tube 200 without providing the ring nut 86 or the spherical portion 69, but with the lower portion of the shaft 68 or the lower portion of the base 63 being connected directly to the second coupling and release means 90 to be directly connected to the motorcycle tube 200.

Alternatively it is possible to provide for the upper portion 92 of the second coupling and release means 90 to comprise only one hinge 96 and the lower portion 91 of the second coupling and release means 90 to comprise only one fork element 95 which mount only one tubular element 97.

Alternatively said object carrier 100 can be mounted with a bicycle or with another vehicle.

The invention thus conceived is susceptible to many modifications and variants, all falling within the same inventive concept; furthermore, all details can be replaced by equivalent technical elements. In practice, the materials used, as well as the dimensions thereof, can be of any type according to the technical requirements.

## Claims

1. An object carrier (100) for a motorcycle that is removable and fixable to said motorcycle,
wherein said carrier (100) comprises a first support (10) for an object and a second support (20),
wherein said second support (20) supports said first support (10),
wherein said second support (20) is mounted with said first support (10) in a separable way by means of a first coupling and release system (50) and in a fixed way by means of a first fixing means (70),
wherein said second support (20) is adapted to be mounted with said motorcycle,
wherein said first coupling and release system (50) comprises a first group of elements (40) mounted with said first support (10) and a second group of elements (60) mounted with said second support (20),
**characterized in that** said first group of elements (40) comprises a flexible ring (41) comprising a plurality of locking teeth (42) that project elastically towards the inside of said flexible ring (41),
wherein said first group of elements (40) comprises an annular connection element (46) comprising an annular guide that rotatably mounts said flexible ring (41), an annular housing (48) that hollows out said annular connection element (46) and a central protuberance (49) that rises from said annular housing (48),
wherein said second group of elements (60) comprises an annular portion (61) having as a base an upper base (63) of said second support (20), said annular portion (61) comprises an upper end that comprises an annular flange (62), wherein said annular portion (61) is a cylinder comprising a cavity at the centre thereof, wherein said annular portion (61) is adapted to be housed within said annular housing (48), said central protuberance (49) is adapted to be housed within said central cavity of said annular portion (61),
wherein said locking teeth (42) can be retracted into the annular connection element (46),
wherein said locking teeth (42) are adapted to pass from a retracted position within said annular connection element (46) to an extracted position for engaging with said annular flange (62) for creating a coupling of said first support (10) with said second support (20),
wherein said first group of elements (40) comprises an upper through hole (47) hollowed out within said central protuberance (49),
wherein said second group of elements (60) comprises a lower hole (67) corresponding to said upper through hole (47), wherein said lower hole (67) is hollowed out within said upper base (63) of said second support (20),
wherein said first fixing means (70) is adapted to be fixed within the upper through hole (47) and within the lower through hole (67) so as to fix said first support (10) to said second support (20).

2. Object carrier (100) according to claim 1, **characterised in that** said first fixing means (70) is a screw or a self-tapping screw.

3. Object carrier (100) according to any one of claims 1 or 2, **characterised in that** said second support (20) is adapted to be mounted with a tube (200) of said motorcycle in a separable way by means of a second coupling and release system (90) of the second support (20) and in a fixed way by means of a second fixing means (110) of the second support (20), wherein said second coupling and release means (90) comprises an upper portion (92) and a lower portion (91), wherein said upper portion (92) is connected to said lower portion of the second support (20), wherein said upper portion (92) comprises an upper curvilinear element (94) and said lower portion (91) comprises a lower curvilinear element (93) and are adapted to be engaged with said tube (200),
wherein said upper portion (92) of said second coupling and release means (90) comprises at least one hinge (96),
wherein said lower portion (91) of said second coupling and release means (90) comprises two fork elements (95),
wherein said second coupling and release means (90) comprises at least one tubular element (97) that comprises an upper portion comprising an upper end hinged to said at least one hinge (96) and a lower portion that is adapted to pass into said at least one fork element (95),
wherein said lower portion of the tubular element (97) comprises at least one threaded portion,
wherein said second coupling and release means (90) comprises a nut (98) adapted to be engaged with said at least one threaded portion of the tubular element (97).

4. Object carrier (100) according to claim 3, **characterised in that** said nut (98) comprises a handle (99) adapted to allow said nut (98) to be manually screwed onto said at least one threaded portion of said at least one tubular element (97).

5. Object carrier (100) according to any one of claims 3 or 4, **characterised in that** said second support (20) comprises a second fixing means (110) adapted to be fixed to said at least one threaded portion of said at least one tubular element (97).

6. Object carrier (100) according to claim 5, **characterised in that** said second fixing means (110) is a self-locking nut.

7. Object carrier (100) according to one of the preceding claims, **characterised in that** said second support (20) is adapted to be mounted with a tube (200) of said motorcycle in a separable way by means of a second coupling and release system (90) and in a fixed way by means of a second fixing means (110).

8. Object carrier (100) according to one of the preceding claims, **characterised in that** said first support (10) comprises a container (30) for said object, wherein said container (30) can be opened, wherein said container (30) is adapted to contain said object which is a remote payment device or an assisted driving device.

9. Object carrier (100) according to claim 8, **characterised in that** said container (30) comprises a lower portion (31) and an upper portion (32) that are hinged for a respective first side by means of a hinge (33), wherein said lower portion (31) comprises a second side opposite said first hinged side, wherein said second side of said lower portion (31) comprises a protuberance (36) comprising a through opening (34), said upper portion (32) comprises a second side opposite said first hinged side, wherein said second side of the upper portion (32) comprises an elastic tongue (35) comprising a tooth (37), said elastic tongue (35) is adapted to pass from a more elastic bending position, to a less elastic bending position, said elastic tongue (35) being adapted to pass through said through opening (34) passing from said less elastic bending position to said more elastic bending position until said tooth (37) passes through and returning to said less elastic bending position, where said tooth (37) is adapted to engage with a lower portion of said protuberance (36) so as to prevent the container (30) being able to pass from a closed and locked position to an open position.

10. Object carrier (100) according to any one of the preceding claims, **characterised in that** a lower portion of said second support (20) comprises a shaft (68) which ends towards the bottom in a spherical portion (69) adapted to allow the regulation of an axial direction of the object carrier (100) with respect to the motorcycle, wherein said second support (20) comprises a fixing element (80) that comprises a ring nut (86) adapted to clamp said spherical portion (69) and to keep it fixed in space.

## Patentansprüche

1. Objektträger (100) für ein Motorrad, der abnehmbar und an dem Motorrad befestigbar ist,
wobei der Träger (100) eine erste Stütze (10) für ein Objekt und eine zweite Stütze (20) umfasst,
wobei die zweite Stütze (20) die erste Stütze (10) trägt,
wobei die zweite Stütze Träger (20) mit der ersten Stütze (10) mittels eines ersten Kopplungs- und Lösesystems (50) trennbar und mittels eines ersten Befestigungsmittels (70) fest verbunden ist,
wobei die zweite Stütze (20) so ausgelegt ist, dass sie mit dem Motorrad montiert werden kann,
wobei das erste Kopplungs- und Lösesystem (50) eine erste Gruppe von Elementen (40), die mit der ersten Stütze (10) montiert sind, und eine zweite Gruppe von Elementen (60), die mit der zweiten Stütze (20) montiert sind, umfasst,
**dadurch gekennzeichnet, dass** die erste Gruppe von Elementen (40) einen flexiblen Ring (41) umfasst, der eine Vielzahl von Verriegelungszähnen (42) aufweist, die elastisch in Richtung der Innenseite des flexiblen Rings (41) vorstehen,
wobei die erste Gruppe von Elementen (40) ein ringförmiges Verbindungselement (46) umfasst, das eine ringförmige Führung, die den flexiblen Ring (41) drehbar lagert, ein ringförmiges Gehäuse (48), das das ringförmige Verbindungselement (46) aushöhlt, und einen zentralen Vorsprung (49) umfasst, der sich von dem ringförmigen Gehäuse (48) erhebt,
wobei die zweite Gruppe von Elementen (60) einen ringförmigen Abschnitt (61) umfasst, der als eine Basis eine obere Basis (63) der zweiten Stütze (20) aufweist, wobei der ringförmige Abschnitt (61) ein oberes Ende umfasst, das einen ringförmigen Flansch (62) umfasst, wobei der ringförmige Abschnitt (61) ein Zylinder ist, der einen Hohlraum in seiner Mitte umfasst, wobei der ringförmige Abschnitt (61) angepasst ist, um innerhalb des ringförmigen Gehäuses (48) aufgenommen zu werden, wobei der zentrale Vorsprung (49) angepasst ist, um innerhalb des zentralen Hohlraums des ringförmigen Abschnitts (61) aufgenommen zu werden,
wobei die Sperrzähne (42) in das ringförmige Verbindungselement (46) zurückgezogen werden können, wobei die Verriegelungszähne (42) so ausgelegt sind, dass sie von einer zurückgezogenen Position innerhalb des ringförmigen Verbindungselements (46) in eine herausgezogene Position übergehen können, um mit dem ringförmigen Flansch (62) in Eingriff zu kommen, um eine Kopplung der ersten Stütze (10) mit der zweiten Stütze (20) herzustellen,
wobei die erste Gruppe von Elementen (40) ein oberes Durchgangsloch (47) umfasst, das innerhalb des zentralen Vorsprungs (49) ausgehöhlt ist,
wobei die zweite Gruppe von Elementen (60) ein unteres Loch (67) umfasst, das dem oberen Durchgangsloch (47) entspricht, wobei das untere Loch (67) innerhalb der oberen Basis (63) der zweiten Stütze (20) ausgehöhlt ist,
wobei das erste Befestigungsmittel (70) so ausgelegt ist, dass es innerhalb des oberen Durchgangslochs (47) und innerhalb des unteren Durchgangslochs (67) befestigt werden kann, um die erste Stütze (10) an der zweiten Stütze (20) zu befestigen.

2. Objektträger (100) nach Anspruch 1, **dadurch gekennzeichnet, dass** das erste Befestigungsmittel (70) eine Schraube oder eine selbstschneidende Schraube ist.

3. Objektträger (100) nach einem der Ansprüche 1 oder 2, **dadurch gekennzeichnet, dass** die zweite Stütze (20) so ausgelegt ist, dass sie mit einem Rohr (200) des Motorrads in einer trennbaren Weise mittels eines zweiten Kopplungs- und Lösesystems (90) der zweiten Stütze (20) und in einer festen Weise mittels eines zweiten Befestigungsmittels (110) der zweiten Stütze (20) montiert werden kann, wobei das zweite Kupplungsund Freigabemittel (90) einen oberen Abschnitt (92) und einen unteren Abschnitt (91) umfasst, wobei der obere Abschnitt (92) mit dem unteren Abschnitt der zweiten Stütze (20) verbunden ist, wobei der obere Abschnitt (92) ein oberes gekrümmtes Element (94) umfasst und der untere Abschnitt (91) ein unteres gekrümmtes Element (93) umfasst, die so angepasst sind, dass sie mit dem Rohr (200) in Eingriff kommen, wobei der obere Teil (92) des zweiten Kopplungs- und Freigabemittels (90) mindestens ein Scharnier (96) umfasst,
wobei der untere Teil (91) des zweiten Kupplungs- und Freigabemittels (90) zwei Gabelelemente (95) umfasst, wobei das zweite Kopplungs- und Freigabemittel (90) mindestens ein röhrenförmiges Element (97) umfasst, das einen oberen Abschnitt mit einem oberen Ende, das an dem mindestens einen Scharnier (96) gelenkig verbunden ist, und einen unteren Abschnitt umfasst, der so angepasst ist, dass er in das mindestens eine Gabelelement (95) passt,
wobei der untere Teil des rohrförmigen Elements (97) mindestens einen Gewindeabschnitt aufweist,
wobei das zweite Kupplungs- und Lösemittel (90) eine Mutter (98) umfasst, die mit dem mindestens einen Gewindeabschnitt des rohrförmigen Elements (97) in Eingriff gebracht werden kann.

4. Objektträger (100) nach Anspruch 3, **dadurch gekennzeichnet, dass** die Mutter (98) einen Griff (99) umfasst, der so angepasst ist, dass die Mutter (98) manuell auf den mindestens einen Gewindeabschnitt des mindestens einen rohrförmigen Elements (97) aufgeschraubt werden kann.

5. Objektträger (100) nach einem der Ansprüche 3 oder 4, **dadurch gekennzeichnet, dass** die zweite Stütze (20) ein zweites Befestigungsmittel (110) umfasst, das an dem mindestens einen Gewindeabschnitt des mindestens einen rohrförmigen Elements (97) befestigt werden kann.

6. Objektträger (100) nach Anspruch 5, **dadurch gekennzeichnet, dass** das zweite Befestigungsmittel (110) eine selbstsichernde Mutter ist.

7. Objektträger (100) nach einem der vorhergehenden Ansprüche, **dadurch gekennzeichnet, dass** die zweite Stütze (20) geeignet ist, mit einem Rohr (200) des Motorrads mittels eines zweiten Kupplungs- und Lösesystems (90) trennbar und mittels eines zweiten Befestigungsmittels (110) fest montiert zu werden.

8. Objektträger (100) nach einem der vorhergehenden Ansprüche, **dadurch gekennzeichnet, dass** die erste Stütze (10) einen Behälter (30) für das Objekt umfasst, wobei der Behälter (30) geöffnet werden kann, wobei der Behälter (30) angepasst ist, um das Objekt zu enthalten, das eine Fernzahlungsvorrichtung oder eine unterstützte Fahrvorrichtung ist.

9. Objektträger (100) nach Anspruch 8, **dadurch gekennzeichnet, dass** der Behälter (30) einen unteren Abschnitt (31) und einen oberen Abschnitt (32) umfasst, die für eine jeweilige erste Seite mittels eines Scharniers (33) gelenkig verbunden sind, wobei der untere Abschnitt (31) eine zweite Seite gegenüber der ersten gelenkig verbundenen Seite umfasst, wobei die zweite Seite des unteren Abschnitts (31) einen Vorsprung (36) aufweist, der eine Durchgangsöffnung (34) umfasst, wobei der obere Abschnitt (32) eine zweite Seite gegenüber der ersten gelenkig verbundenen Seite aufweist, wobei die zweite Seite des oberen Abschnitts (32) eine elastische Zunge (35) aufweist, die einen Zahn (37) umfasst und die elastische Zunge (35) so ausgebildet ist, dass sie von einer elastischeren Biegeposition in eine weniger elastische Biegeposition übergeht, wobei die elastische Zunge (35) so ausgebildet ist, dass sie durch die Durchgangsöffnung (34) hindurchgeht und von der weniger elastischen Biegeposition in die elastischere Biegeposition übergeht, bis der Zahn (37) hindurchgeht und in die weniger elastische Biegeposition zurückkehrt, wobei der Zahn (37) so ausgebildet ist, dass er mit einem unteren Abschnitt des Vorsprungs (36) in Eingriff kommt, um zu verhindern, dass der Behälter (30) von einer geschlossenen und verriegelten Position in eine offene Position übergehen kann.

10. Objektträger (100) nach einem der vorhergehenden Ansprüche, **dadurch gekennzeichnet, dass** ein unterer Abschnitt der zweiten Stütze (20) einen Schaft (68) umfasst, der zum Boden hin in einem kugelförmigen Abschnitt (69) endet, der so beschaffen ist, dass er die Regulierung einer axialen Richtung des Objektträgers (100) in Bezug auf das Motorrad ermöglicht, wobei die zweite Stütze (20) ein Befestigungselement (80) umfasst, das eine Ringmutter (86) umfasst, die so beschaffen ist, dass sie den kugelförmigen Abschnitt (69) festklemmt und ihn im Raum fixiert hält.

## Revendications

1. Un porte-objet (100) pour motocyclette, amovible et pouvant être fixé à ladite motocyclette,
dans lequel ledit porte-objet (100) comprend un premier support (10) pour un objet et un second support (20),
dans lequel ledit second support (20) supporte ledit premier support (10),
dans lequel ledit second support (20) est monté avec ledit premier support (10) de manière séparable au moyen d'un premier système d'accouplement et de libération (50) et de manière fixe au moyen d'un premier moyen de fixation (70),
dans lequel ledit second support (20) est adapté pour être monté avec ladite motocyclette,
dans lequel ledit premier système d'accouplement et de libération (50) comprend un premier groupe d'éléments (40) monté avec ledit premier support (10) et un second groupe d'éléments (60) monté avec ledit second support (20),
**caractérisé en ce que** ledit premier groupe d'éléments (40) comprend un anneau flexible (41) comprenant une pluralité de dents de verrouillage (42) qui font saillie de manière élastique vers l'intérieur dudit anneau flexible (41),
dans lequel ledit premier groupe d'éléments (40) comprend un élément de connexion annulaire (46) comprenant un guide annulaire qui monte de manière rotative ledit anneau flexible (41), un logement annulaire (48) qui creuse ledit élément de connexion annulaire (46) et une protubérance centrale (49) qui s'élève à partir dudit logement annulaire (48),
dans lequel ledit second groupe d'éléments (60) comprend une partie annulaire (61) ayant comme base une base supérieure (63) dudit second support (20), ladite partie annulaire (61) comprend une extrémité supérieure qui comprend une bride annulaire (62), dans lequel ladite partie annulaire (61) est un cylindre comprenant une cavité en son centre, dans lequel ladite partie annulaire (61) est adaptée pour être logée dans ledit logement annulaire (48), ladite protubérance centrale (49) est adaptée pour être logée dans ladite cavité centrale de ladite partie annulaire (61),
dans lequel lesdites dents de verrouillage (42) peuvent être rétractées dans l'élément de connexion annulaire (46),
dans lequel lesdites dents de verrouillage (42) sont adaptées pour passer d'une position rétractée à l'intérieur dudit élément de connexion annulaire (46) à une position déployée pour s'engager avec ladite bride annulaire (62) afin de créer un couplage dudit premier support (10) avec ledit second support (20), dans lequel ledit premier groupe d'éléments (40) comprend un trou traversant supérieur (47) creusé dans ladite protubérance centrale (49),
dans lequel ledit second groupe d'éléments (60) comprend un trou inférieur (67) correspondant au dit trou traversant supérieur (47), dans lequel ledit trou inférieur (67) est creusé dans ladite base supérieure (63) dudit second support (20),
dans lequel ledit premier moyen de fixation (70) est adapté pour être fixé dans le trou traversant supérieur (47) et dans le trou traversant inférieur (67), de façon à fixer ledit premier support (10) au dit second support (20).

2. Porte-objet (100) selon la revendication 1, **caractérisé en ce que** ledit premier moyen de fixation (70) est une vis ou une vis autotaraudeuse.

3. Porte-objet (100) selon l'une quelconque des revendications 1 ou 2, **caractérisé en ce que** ledit second support (20) est adapté pour être monté avec un tube (200) de ladite motocyclette d'une manière séparable au moyen d'un second système de couplage et de libération (90) du second support (20) et d'une manière fixe au moyen d'un second moyen de fixation (110) du second support (20), dans lequel ledit second système de couplage et de libération (90) comprend une partie supérieure (92) et une partie inférieure (91), dans lequel ladite partie supérieure (92) est reliée à ladite partie inférieure du second support (20), dans lequel ladite partie supérieure (92) comprend un élément curviligne supérieur (94) et ladite partie inférieure (91) comprend un élément curviligne inférieur (93) et sont adaptées pour être engagées avec ledit tube (200),
dans lequel ladite partie supérieure (92) dudit second moyen de couplage et de libération (90) comprend au moins une charnière (96),
dans lequel ladite partie inférieure (91) dudit second moyen d'accouplement et de libération (90) comprend deux éléments de fourche (95),
dans lequel ledit second moyen de couplage et de libération (90) comprend au moins un élément tubulaire (97) qui comprend une partie supérieure comprenant une extrémité supérieure articulée à ladite au moins une charnière (96) et une partie inférieure qui est adaptée pour passer dans ledit au moins un élément de fourche (95),
dans lequel ladite partie inférieure de l'élément tubulaire (97) comprend au moins une partie filetée, dans lequel ledit second moyen de couplage et de libération (90) comprend un écrou (98) adapté pour être engagé avec ladite au moins une partie filetée de l'élément tubulaire (97).

4. Porte-objet (100) selon la revendication 3, **caractérisé en ce que** ledit écrou (98) comprend une poignée (99) adaptée pour permettre au dit écrou (98) d'être vissé manuellement sur ladite au moins une partie filetée dudit au moins un élément tubulaire (97) .

5. Porte-objet (100) selon l'une quelconque des revendications 3 ou 4, **caractérisé en ce que** ledit second support (20) comprend un second moyen de fixation (110) adapté pour être fixé à ladite au moins une partie filetée dudit au moins un élément tubulaire (97) .

6. Porte-objet (100) selon la revendication 5, **caractérisé en ce que** ledit second moyen de fixation (110) est un écrou autobloquant.

7. Porte-objet (100) selon l'une des revendications précédentes, **caractérisé en ce que** ledit second support (20) est adapté pour être monté avec un tube (200) de ladite motocyclette de manière séparable au moyen d'un second système d'accouplement et de libération (90) et de manière fixe au moyen d'un second moyen de fixation (110).

8. Porte-objet (100) selon l'une des revendications précédentes, **caractérisé en ce que** ledit premier support (10) comprend un conteneur (30) pour ledit objet, dans lequel ledit conteneur (30) peut être ouvert, dans lequel ledit conteneur (30) est adapté pour contenir ledit objet qui est un dispositif de paiement à distance ou un dispositif de conduite assistée.

9. Porte-objet (100) selon la revendication 8, **caractérisé en ce que** ledit conteneur (30) comprend une partie inférieure (31) et une partie supérieure (32) qui sont articulées pour un premier côté respectif au moyen d'une charnière (33), dans lequel ladite partie inférieure (31) comprend un second côté opposé au dit premier côté articulé, dans lequel ledit second côté de ladite partie inférieure (31) comprend une protubérance (36) comprenant une ouverture traversante (34), ladite partie supérieure (32) comprend un second côté opposé au dit premier côté articulé, dans lequel ledit second côté de la partie supérieure (32) comprend une languette élastique (35) comprenant une dent (37), ladite languette élastique (35) est adaptée pour passer d'une position de flexion plus élastique à une position de flexion moins élastique, ladite languette élastique (35) étant adaptée pour passer à travers ladite ouverture traversante (34) en passant de ladite position de flexion moins élastique à ladite position de flexion plus élastique jusqu'à ce que ladite dent (37) passe par et revient à ladite position de flexion moins élastique, dans lequel ladite dent (37) est adaptée pour s'engager avec une partie inférieure de ladite protubérance (36) de manière à empêcher le conteneur (30) de passer d'une position fermée et verrouillée à une position ouverte.

10. Porte-objet (100) selon l'une quelconque des revendications précédentes, **caractérisé en ce qu'**une partie inférieure dudit second support (20) comprend un arbre (68) qui se termine vers le bas en une partie sphérique (69) adaptée pour permettre le réglage d'une direction axiale du porte-objet (100) par rapport à la motocyclette, dans lequel ledit second support (20) comprend un élément de fixation (80) qui comprend un écrou annulaire (86) adapté pour serrer ladite partie sphérique (69) et la maintenir fixe dans l'espace.
